Europäisches Patentamt

European Patent Office

Office européen des brevets

(19)

(11) Publication number: **0 295 629 B1**

(12) **EUROPEAN PATENT SPECIFICATION**

(45) Date of publication of patent specification: **14.10.92**   (51) Int. Cl.⁵: **H01M 8/04**

(21) Application number: **88109476.7**

(22) Date of filing: **14.06.88**

(54) **Fuel cell stack cooling system.**

(30) Priority: **15.06.87 US 62040**

(43) Date of publication of application:
**21.12.88 Bulletin 88/51**

(45) Publication of the grant of the patent:
**14.10.92 Bulletin 92/42**

(84) Designated Contracting States:
**DE IT SE**

(56) References cited:
**GB-A- 1 558 081**
**US-A- 4 202 933**

(73) Proprietor: **INTERNATIONAL FUEL CELLS CORPORATION**
**195 Governor's Highway**
**South Windsor Connecticut 06074(US)**

(72) Inventor: **Abrams, Martin Lloyd**
**118 Three Mile Road**
**Glastonbury, CT 06033(US)**
Inventor: **D'Aquila, Daniel Louis**
**94 Berle Road**
**South Windsor, CT 06074(US)**
Inventor: **Scheffler, Glenn William**
**7 Willie Circle**
**Tolland, CT 06084(US)**

(74) Representative: **Klunker . Schmitt-Nilson . Hirsch**
**Winzererstrasse 106**
**W-8000 München 40(DE)**

## Description

Technical Field

This invention relates to a system and method for cooling a fuel cell stack coolant liquid in a closed coolant recirculating loop. More particularly, this invention relates to a cooling system and method which does not involve steam condensation and wherein the coolant is cooled to a subcooled level prior to reintroduction into the stack.

Background Art

Fuel cell stack power systems which use a water coolant will typically have the coolant in a two-phase water/steam mode throughout substantially the entire passage of the coolant through the stack. The temperature of the water in the two-phase coolant will be substantially constant as the coolant traverses the stack, with the percentage of steam increasing in the two-phase coolant from coolant inlet, to coolant outlet. The coolant thus remains in a substantially isothermal condition as it passes through the stack cooling passages. In order to preserve the isothermal nature of the coolant, systems cooled in this manner will typically utilize steam condensers and steam separators in concert so that the water will not significantly cool before it is returned to the stack. Thus, the coolant will be exhausted from the cooling passages of the stack as a two-phase water/steam mixture, will be passed to a steam condenser to condense more water out of the steam phase, and also passed to a steam separator where the steam and water phases will be separated, the steam going to a fuel reformer and the water going back to the coolant passages in the stack. The condenser and separator may be used in either order. Before returning to the stack, typically, makeup water will be mixed with the returning water, but the temperature of the returning water will not be lowered during this recycling more than a very few degrees. Thus, where the coolant water is returned to the stack, almost immediately it begins to boil creating more steam.

There are several problems which exist in the aforesaid fuel cell stack cooling system scheme. One of the problems relates to the handling of the steam phase and the fact that the steam condensers must be physically elevated above the steam separator, and the steam separators must be physically elevated above the cell stack. This creates packaging or housing problems for the fuel cell system relating to the necessary height of the housing in which the system is contained. This problem is particularly apparent with small to mid-range power systems. Another problem created by isothermal cooling of the fuel cell stacks occurs in cells which use aqueous electrolyte solutions, such as acid or alkaline cells. This second problem concerns the evaporation of electrolyte into the oxidation gas. This evaporated electrolyte leaves the cell area with the exhausted oxidation gas. Without special modifications to the cell structure, this will be a serious problem which is continuous at high load outputs. This requires electrolyte replacement, and special stack construction to combat corrosion in stack manifolds and the like.

Disclosure of Invention

This invention relates to a fuel cell stack cooling system which is nonisothermal and which does not involve steam condensation in rejecting heat from the coolant before returning it to the stack. The two-phase water/steam coolant exhausted from the stack cooling conduits is taken to a steam separator drum wherein the steam phase is separated from the water phase, with the steam phase being directed to a catalytic reformer wherein raw hydrocarbon fuel is reformed with steam into a hydrogen-rich fuel for consumption in the cells. The separated water phase is taken to a heat exchanger where the water temperature is lowered to a predetermined subcooled level before reentering the stack cooling passages. There is a bypass conduit which the water may flow through to bypass the heat exchanger, and a control valve which controls the flow path of the water with respect to the heat exchanger. Thus, after leaving the steam separator, all, some, or none of the water will flow through the heat exchanger, and the rest will bypass the heat exchanger, and then remix before reentering the stack. A temperature sensor is disposed downstream of the steam separator to continuously monitor the temperature of the water exiting from the steam separator. The sensor is connected to the power plant microprocessor control so that the latter can continuously adjust the control valve to maintain the proper water temperature for entry into the stack. Thus, when the water leaving the steam separator is hotter, the valve is adjusted to cause more water to flow through the heat exchanger, and when the water from the steam separator is cooler, the bypass flow path is taken. The subcooled water entering the stack is oriented in the stack to cause electrolyte vapor to condense out of the oxidant gas stream and return to the electrolyte matrix before the oxidant gas stream is exhausted from the stack. This condensation feature substantially increases the effective life of the electrolyte in the stack.

It is therefore an object of this invention to provide an improved fuel cell stack cooling system which does not isothermally cool the cells in the stacks.

It is an additional object of this invention to provide a cooling system of the character described which does not include the condensation of steam to reject heat in the coolant prior to returning the coolant to the stacks.

It is a further object of this invention to provide a cooling system of the character described wherein the two-phase water/steam mixture exhausted from the stack cooling passages is separated into its two phases and the water then subcooled before being returned to the stack.

It is another object of this invention to provide a cooling system of the character described wherein a control valve is provided to vary the proportion of water which is subcooled depending on the temperature of the water leaving the water/steam separator.

It is yet another object of this invention to provide a cooling system of the character described wherein vaporized electrolyte is condensed out of oxidant gases prior to the latter being exhausted from the fuel cells in the stacks.

These and other objects and advantages of this invention will become more readily apparent from the following detailed description of a preferred embodiment thereof when taken in conjunction with the accompanying drawings.

Brief Description of the Drawings

Fig. 1 is a schematic representation of fuel cell stack coolant circulating loop formed in accordance with this invention;

Fig. 2 is a schematic representation of a coolant plate showing the general flow path of the coolant therethrough along the superposed flow path of the oxidant gas; and

Fig. 3 is a graphic representation of the thermal profile of the coolant as it passes through the coolant plates.

Best Mode for Carrying Out the Invention

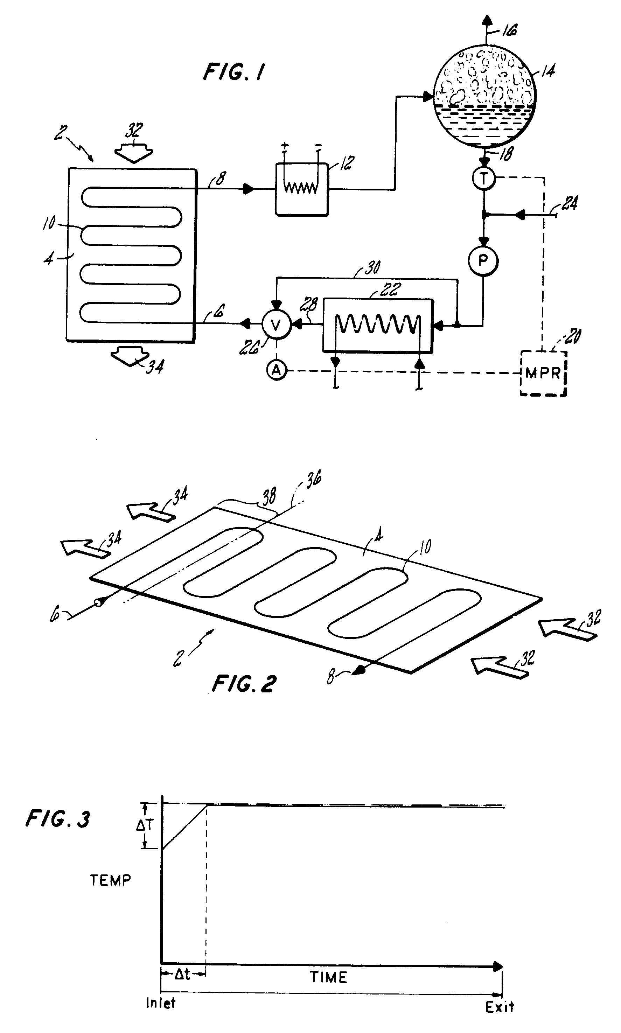

Referring now to Fig. 1, there is shown a preferred embodiment, in schematic form, of a fuel cell stack cooling recirculation loop which is formed in accordance with this invention. The cell stack is denoted generally by the numeral 2, and will be described as a phosphoric acid system, however, it will be noted that any aqueous electrolyte can be used with this invention. A cooling plate 4 is shown in the stack 2, with the water coolant entering the coolant plate 4 at inlet 6 and exiting the coolant plate 4 at exit 8, the inlet 6 and exit 8 being interconnected by a serpentine coolant flow passage 10. It will be, of course, understood that while only one coolant plate 4 is shown in Fig. 1, an actual stack will contain a plurality of such plates, and that the plate 4 could take the form of a plate which has a profiled passage or passages therein, or has coolant tubes associated therewith. The coolant will be in the form of a water/steam two-phase mixture as it leaves the exit 8. This two-phase mixture passes through a heater 12, shown as an electric heater, and thence to a water/steam separating drum 14. The purpose of the heater 12 is for use in start up and for low power load modes. The steam fraction of the two-phase mixture is drawn off in the separator 14 into a conduit 16 which will take the steam to a catalytic hydrocarbon fuel reformer (not shown). The water fraction is removed from the separator via conduit 18 where a temperature sensor T continuously monitors the temperature of the water leaving the separator 14. The sensor T feeds the water temperature data to a microprocessor control 20 which controls operation of the entire power plant. The separated water is pumped by a pump P to a heat exchanger 22 where the temperature of the water will be lowered to a subcooled level, that is to say a level which is below the saturation temperature corresponding to the stack cooling recirculation loop pressure. Upstream of the pump P makeup water is added to the recirculation loop via conduit 24 to replenish water lost from the loop in the steam.

The heat exchanger 22 will preferably operate with a liquid or gaseous coolant. Between the heat exchanger 22 and the coolant inlet 6 there is disposed a control valve 26 which is operated, or modulated, by an actuator A governed by the microprocesssor 20. The valve 26 is a three way valve which is connected to the outlet conduit 28 from the heat exchanger 22, to the inlet 6, and to a bypass conduit 30 which will duct water around the heat exchanger 22. The microprocessor 20 continuously alters operation of the valve 26 in response to fluctuations in the temperature of the water sensed by the sensor T. The valve 26 thus apportions the water flowing through the heat exchanger 22 and through the bypass conduit 30 so that the water flowing through the inlet 6 will be at the targeted subcooled temperature. This means that when hotter water temperatures are sensed by the sensor T then the valve 26 will be adjusted to run more water through the heat exchanger 22, and when cooler temperatures are sensed at T, then the valve 26 will be adjusted to route more water through the bypass conduit 30.

By way of example, the following is illustrative of some operating temperatures which may be targeted and used in the loop. The stack cells will be operated at a temperature of about 204°C (400°F). The water coolant saturation temperature will be about 190°C (375°F) and water pressure at 127.5 Ncm$^{-2}$ (185 psi). The subcooled temperature of the water subsequent to the heat exchanger but prior to the coolant inlet will be targeted at about 177°C (350°F). Thus, the water coolant will enter the stack cooling passages at a nominal 177°C (350°F) whereupon the temperature of the water will steadily rise to the saturation temperature of 190°C (375°F), at which the water will boil, creating steam as it passes through the remainder of the cooling passages in the stack. Thus the portion of the cells which is cooled by the intially entering water will be cooler than the rest of the cell area. The oxidation flow path, which in the case of an acid cell system is the cathode air flow path, will be arranged so that the air flows into the stack cells adjacent to the coolant outlet 8, as denoted by arrows 32 in Figs. 1 and 2, and the cathode exhaust flows out of the cells adjacent to the coolant inlet 6 as denoted by arrows 34 in Figs 1 and 2. In Fig. 2, the broken line 36 is used to denote the inner edge of the portion of the cells which is cooler by reason of not being cooled by liquid at the saturation temperature. Thus, the portion 38 of the cells is the condensation zone wherein cathode gases are cooled prior to exiting the stack and wherein acid which has vaporized into the cathode gases will condense back out again to reenter the electrolyte matrix. Preferably, the portion of the cells which is to the right of the broken line 36, as viewed in Fig. 2, will be where the electrochemical reaction takes place, and will also be cooled substantially entirely isothermally. The portion of the cells which is to the left of the broken line 36, as viewed in Fig. 2, will be substantially free of electrochemical reaction, and will include a matrix extension onto which acid can condense and be wicked back into the electrochemically active part of the cells.

Referring to Fig. 3, there is shown a graphic representation of coolant temperature T versus the time t it takes for the coolant to pass through the stack from the inlet 6 to the outlet 8. The temperature - time relationship for the prior art all isothermal cooling format is shown in phantom lines, and the preheating plus partial isothermal cooling format of this invention is shown in solid lines. It will be noted that the addition of makeup water to the prior art all isothermal cooling format will lower the temperature of the water entering the coolant inlet on the order of 1.1°C or 1.7°C (two or three degrees F), but that the return to the isothermal boiling temperature is very quick and does not result in any appreciable subcooled time span. In Fig. 3 $\Delta$T represents the number of degrees below the isothermal boiling temperature at which the subcooled entry temperature is located, and $\Delta$t represents the time span that it takes the subcooled water to reach the isothermal boiling temperature as the water passes through the coolant passages in the stack. $\Delta$T is controlled by the heat exchanger 22 and the control valve 26, and $\Delta$t is controlled by the flow rate of the coolant water in the cooling passages. Thus, one merely need select a $\Delta$T which provides for sufficient cooling to cause the acid vapor to condense out of the cathode gases prior to leaving the cell plate area, and a $\Delta$t which will create a well defined condensation zone in the cell plate area adjacent to the electrochemically active part thereof.

It will be readily appreciated that the fuel cell stack cooling loop system of this invention can be formed with conventional components and will ease packaging or housing limitations previously imposed upon power systems which utilized steam condensation in the rejection of heat in coolant being returned to the stacks. There are fewer components than with the prior art, and the problem of electrolyte loss through evaporation is dealt with. Using the electrolyte condensation recovery abilities of this invention, electrolyte life can be doubled in a stack operating in otherwise normal conditions. Very accurate control of coolant reentry temperatures is accomplished with the system of this invention through the use of the interacting temperature sensor and coolant flow control valve.

## Claims

1. A fuel cell stack system comprising a cooling system using a water coolant and a coolant heat rejection recirculation loop, which loop does not include a steam condenser, said cooling system comprising:

(a) means (4) forming coolant passages (10) in the stack (2), said cooling passages having an inlet end (6) and an outlet end (8) for receiving water and discharging a water/steam mixture, respectively;

(b) A steam separator (14) for separating said water/steam mixture into water and steam;

(c) first conduit means at said coolant passage outlet end (8) for transferring the water/steam mixture in said loop to said steam separator (14);

(d) A heat exchanger (22) operable to lower the temperature of the water to target subcooled temperature which is a predetermined amount below the autothermal boiling temperature of water at the pressure in the fuel cell stack (2);

(e) Second conduit means (18) at said steam separator (14) for transferring water from said steam separator to said heat exchanger (22);

(f) Third conduit means (28) at said heat exchanger (22) for transferring water from said heat exchanger to said inlet end (6) of said coolant passages (10);

(g) Adjustable valve means (26) in said third conduit means;

(h) Bypass conduit means (30) interconnecting said second (18) and third (28) conduit means around said heat exchanger (22) whereby water flowing through said bypass conduit means from said second conduit means to said third conduit means does not flow through said heat exchanger;

(i) Sensor means (T) in said second conduit means (18) operable to sense the temperature of the water flowing from the steam separator (14); and

(j) Control means (20) operable connected to said sensor means (T) and to said adjustable valve means (26), said control means (20) being operable to cause said valve means (26) to increase the proportion of water flowing through said heat exchanger (22) in response to increased water temperatures from said sensor means (T) and conversely, to cause said valve means (26) to increase the proportion of water flowing through said bypass conduit means (30) in response to decreased water temperatures from said sensor means (T), whereby the temperature of water mixing in said third conduit means (28) from said heat exchanger (22) and said bypass conduit means (30) is substantially equal to said target subcooling temperature.

2. The fuel cell stack system of claim 1, further comprising means (P) operable to provide a predetermined flow rate for the coolant water through said stack coolant passages (10), which flow rate combined with said target subcooled temperature is operable to provide a well defined zone (38) adjacent to said coolant passages inlet (6) wherein electrolyte vapor entrained in oxidation gas will condense out of the oxidation gas exhaust.

3. The fuel cell stack system of claim 1 or 2, wherein said means (P) are pump means and wherein said target subcooled temperature is sufficiently lower than the autothermal boiling temperature of the water so that a defined zone (38) of the stack adjacent said coolant passages inlet end (6) will be cooled to a temperature which is below the electrochemical operating temperature of the stack (2) by coolant water which remains below the autothermal boiling temperature of the water, with the latter temperature being the temperature of the coolant water used to cool the remainder of the stack (2) outside of said defined zone (38).

4. The fuel cell stack system of any one of claims 1 to 3, wherein substantially all of the steam formed in the stack (2) is transferred from said steam separator (14) through a fourth conduit means (16) to a catalytic fuel reformer.

5. The fuel cell stack system of any one of claims 1 to 4, further comprising makeup water conduit means (24) for introducing makeup water into said second conduit means (18) between said sensor means (T) and said heat exchanger (22).

6. The fuel cell stack system of any one of claims 2 to 5, wherein said defined zone (38) is disposed adjacent to an oxidation gas exhaust side (34) of the stack (2) to provide an electrolyte condensation area in said defined zone (38) which is sufficiently cooler than said remainder of the stack to cause electrolyte vapor entrained in the oxidation gas to condense out of the oxidation gas prior to exhausting the oxidation from the stack.

7. The cooling system of any one of claims 1 to 6, wherein said adjustable valve means (26) is a three way valve.

**Patentansprüche**

1. Brennstoffzellenstapelsystem mit einem Kühlsystem, das ein Kühlmittel in Form von Wasser sowie eine Kühlmittelwärmeabführungs-Umlaufschleife verwendet, wobei die Schleife keinen Dampfkondensator beinhaltet und wobei das System aufweist:

(a) eine Einrichtung (4) zur Ausbildung von Kühlmittelkanälen (10) im Stapel (2), die ein Einlaßende (6) und ein Auslaßende (8) zur Aufnahme von Wasser bzw. zur Abgabe eines Wasser/Dampf-Gemisches aufweisen;

(b) einen Dampfabscheider (14) zur Trennung des Wasser/Dampf-Gemisches in Wasser und Dampf;

(c) eine erste Leitungseinrichtung am Auslaßende (6) des Kühlmittelkanals zur Überführung des Wasser/Dampf-Gemisches in der Schleife zu dem Dampfabscheider (14);

(d) einen Wärmetauscher (22), der zum Absenken der Temperatur des Wassers auf eine heruntergekühlte Zieltemperatur dient, die um einen vorbestimmten Betrag unterhalb der Eigenerwärmungs-Siedetemperatur des Wassers bei dem Druck in dem Brennstoffzellenstapel (2) liegt;

(e) eine zweite Leitungseinrichtung (18) an dem Dampfabscheider (14) zur Überführung von Wasser vom Dampfabscheider zum Wärmetauscher (22);

(f) eine dritte Leitungseinrichtung (28) am Wärmetauscher (22) zur Überführung von Wasser vom Wärmetauscher zum Einlaßende (6) der Kühlmittelkanäle (10);

(g) eine einstellbare Ventileinrichtung (26) in der dritten Leitungseinrichtung;

(h) eine Bypass-Leitungseinrichtung (30), die die zweite Leitungseinrichtung (18) und die dritte Leitungseinrichtung (28) unter Umgehung des Wärmetauschers (22) miteinander verbindet, wodurch von der zweiten Leitungseinrichtung durch die BypassLeitungseinrichtung in die dritte Leitungseinrichtung strömendes Wasser nicht durch den Wärmetauscher fließt;

(i) eine Sensoreinrichtung (T) in der zweiten Leitungseinrichtung (18), die zum Erfassen der Temperatur des aus dem Dampfabscheider (14) strömenden Wassers dient; und

(j) eine Steuereinrichtung (20), die mit der Sensoreinrichtung (T) und der einstellbaren Ventileinrichtung (26) betriebsmäßig verbunden ist, wobei die Steuereinrichtung (20) derart betreibbar ist, daß sie die Ventileinrichtung (26) unter Ansprechen auf von der Sensoreinrichtung erfaßte, erhöhte Wassertemperaturen zum Erhöhen des den Wärmetauscher (22) durchströmenden Anteils des Wassers veranlaßt und umgekehrt die Ventileinrichtung (26) veranlaßt, unter Ansprechen auf von der Sensoreinrichtung (T) erfaßte, verminderte Wassertemperaturen den durch die Bypass-Leitungseinrichtung (30) durchströmenden Anteil des Wassers zu erhöhen, wodurch die Temperatur des aus dem Wärmetauscher (22) und der Bypass-Leitungseinrichtung (30) austretenden und sich in der dritten Leitungseinrichtung (28) mischenden Wassers der Herunterkühl-Zieltemperatur im wesentlichen entspricht.

2. Brennstoffzellenstapelsystem nach Anspruch 1, bei dem außerdem eine Einrichtung (P) vorhanden ist, die zur Bereitstellung einer vorbestimmten Strömungsgeschwindigkeit des Kühlmittelwassers durch die Kühlmittelkanäle (10) des Stapels dient, wobei die Strömungsgeschwindigkeit im Zusammenwirken mit der Herunterkühl-Zieltemperatur zur Ausbildung einer genau definierten Zone (38) benachbart zum Einlaß (6) der Kühlmittelkanäle dient, in der vom Oxidationsgas mitgeführter Eletrolytdampf aus dem Oxidationsgas-Abstrom herauskondensiert.

3. Brennstoffzellenstapelsystem nach Anspruch 1 oder 2, in dem die Einrichtung (P) eine Pumpeinrichtung ist, und in dem die heruntergekühlte Zieltemperatur ausreichend niedriger als die Eigenerwärmungs-Siedetemperatur des Wasser ist, so daß eine nahe dem Einlaßende (6) der Kühlmittelkanäle benachbart gelegene, definierte Zone (38) des Stapels auf eine Temperatur unterhalb der elektrochemischen Betriebstemperatur des Stapels (2) durch Kühlmittelwasser gekühlt wird, dessen Temperatur unterhalb der Eigenerwärmungs-Siedetemperatur des Wassers bleibt, wobei es sich bei letzterer Temperatur um diejenige Temperatur des Kühlmittelwassers handelt, die zum Kühlen des übrigen Stapels außerhalb der definierten Zone (38) verwendet wird.

4. Brennstoffzellenstapelsystem nach einem der Ansprüche 1 bis 3, bei dem im wesentlichen der gesamte in dem Stapel (2) gebildete Dampf vom Dampfabscheider (14) durch eine vierte Leitungseinrichtung (16) zu einem katalytischen Brennstoff-Reformer überführt wird.

5. Brennstoffzellenstapelsystem nach einem der Ansprüche 1 bis 4, bei dem außerdem eine Zusatzwasser-Leitungseinrichtung (24) zum Einleiten von Zusatzwasser in die zweite Leitungseinrichtung (18) zwischen der Sensoreinrichtung (T) und dem Wärmetauscher (22) vorhanden ist.

6. Brennstoffzellenstapelsystem nach einem der Ansprüche 2 bis 5, bei dem die definierte Zone (38) benachbart einer Oxidationsgasaustrittsseite (34) des Stapels (2) angeordnet ist, um einen Elektrolyt-Kondensationsbereich in der definierten Zone (38) zu schaffen, die ausreichend kühler ist als der restliche Stapel, um im Oxidationsgas mitgeführten Elektrolytdampf zum Herauskondensieren aus dem Oxidationsgas zu veranlassen, bevor das Oxidationsgas aus dem Stapel austritt.

7. Kühlsystem nach einem der Ansprüche 1 bis 6, bei dem die einstellbare Ventileinrichtung (26) durch ein Dreiwegeventil gebildet ist.

**Revendications**

1. Système à empilage de piles à combustible, comprenant un système de refroidissement utilisant un réfrigérant aqueux et une boucle de recirculation de rejet de la chaleur du réfrigérant, ladite boucle ne comprenant pas de condenseur de vapeur, ledit système de refroidissement comprenant :

(a) des moyens (4) formant des passages de réfrigérant (10) dans l'empilage (2), lesdits passages de refroidissement comportant une extrémité d'entrée (6) et une extrémité de sortie (8) pour, respectivement, recevoir de l'eau et évacuer un mélange eau/vapeur;

(b) un séparateur de vapeur (14) destiné à assurer la séparation dudit mélange eau/vapeur en eau et vapeur;

(c) des premiers moyens de tuyauterie, situés sur ladite extrémité de sortie de passage de réfrigérant (8), pour assurer le transfert du mélange eau/vapeur dans ladite boucle, vers ledit séparateur de vapeur (14);

(d) un échangeur de chaleur (22) susceptible de fonctionner pour abaisser la température de l'eau à une température de consigne sous-refroidie, inférieure d'une valeur prédéterminée à la température d'ébullition auto-thermique de l'eau à la pression régnant dans l'empilage de pile à combustible (2);

(e) des seconds moyens de tuyauterie (18), sur ledit séparateur de vapeur (14), pour assurer le transfert de l'eau, depuis ledit séparateur de vapeur vers ledit échangeur de chaleur (22);

(f) des troisièmes moyens de tuyauterie (28) situés sur ledit échangeur de chaleur (22), pour assurer le transfert de l'eau, depuis ledit échangeur de chaleur vers ladite extrémité d'entrée (6) desdits passages de réfrigérant (10);

(g) des moyens de valve (26) ajustables, montés dans lesdits troisièmes moyens de tuyauterie;

(h) des moyens de tuyauterie de dérivation (30), assurant l'interconnexion entre lesdits second (18) et troisième (28) moyens de tuyauterie, autour dudit échangeur de chaleur (22), de manière à ce que l'eau qui s'écoule dans lesdits moyens de tuyauterie de dérivation, allant desdits seconds moyens de tuyauterie auxdits troisièmes moyens de tuyauterie, ne passe pas dans ledit échangeur de chaleur;

(i) des moyens de capteur (T), montés dans lesdits seconds moyens de tuyauterie (18), susceptible de fonctionner pour mesurer la température de l'eau qui s'écoule depuis le séparateur de vapeur (14); et

(j) des moyens de commande (20), susceptibles de fonctionner en liaison avec lesdits moyens de capteur (T) et lesdits moyens de valve ajustables (26), lesdits moyens de commande (20) étant susceptibles d'actionner par leur fonctionnement lesdits moyens de valve réglables (26), en vue d'augmenter la proportion d'eau qui s'écoule par ledit échangeur de chaleur (22) en réponse à l'augmentation des températures d'eau telles que mesurées par lesdits moyens de capteur (T) et, inversement, actionner lesdits moyens de valve réglables (26) en vue d'augmenter la proportion d'eau qui s'écoule dans lesdits moyens de tuyauterie de dérivation (30), en réponse à la diminution des températures d'eau telles que mesurées par lesdits moyens de capteur (T), de manière que la température du mélange d'eau passant dans lesdits troisièmes moyens de tuyauterie (28), en provenance dudit échangeur de chaleur (22), et dans lesdits moyens de tuyauterie de dérivation (30) soit sensiblement égale à ladite température de consigne de sous-refroidissement.

2. Système à empilage de piles à combustible selon la revendication 1, comprenant en outre des moyens (P), susceptibles de fonctionner pour produire un débit déterminé d'eau de réfrigération dans lesdits passages (10) de réfrigérant de l'empilage, le débit combiné à ladite température de consigne de sous-refroidissement étant pilotable pour produire une zone (38) bien définie, adjacente à ladite entrée (6) des passages de réfrigérant, dans laquelle la vapeur d'électrolyte entraînée dans le gaz d'oxydation va se condenser en dehors de l'échappement de gaz d'oxydation.

3. Système à empilage de piles à combustible selon la revendication 1 ou 2, dans lequel lesdits moyens (P) sont des moyens de pompage et dans lequel ladite température de consigne de sous-refroidissement est suffisamment inférieure à la température d'ébullition auto-thermique de l'eau qu'une zone définie (38) de l'empilage adjacente à ladite extrémité d'entrée (6) des passages de réfrigérant, va être refroidie à une température inférieure à la température de fonctionnement électrochimique de l'empilage (2) par l'eau de réfrigération qui reste au-dessous de la température d'ébullition auto-thermique de l'eau, cette dernière étant la température de l'eau de refroidissement utilisée pour refroidir le reste de l'empilage (2) extérieurement à ladite zone définie (38).

4. Système à empilage de piles à combustible selon l'une quelconque des revendications 1 à 3, dans lequel la quasi totalité de la vapeur formée dans l'empilage (2) est transférée depuis ledit séparateur de vapeur (14), par des quatrièmes moyens de tuyauterie (16), vers un réformeur catalytique.

5. Système à empilage de piles à combustible selon l'une quelconque des revendications 1 à 4, comprenant en outre des moyens de tuyauterie (24) pour l'eau d'appoint, pour introduire de l'eau d'appoint dans lesdits seconds moyens de tuyauterie (18), entre lesdits moyens de capteur (T) et ledit échangeur de chaleur (22).

6. Système à empilage de piles à combustible selon l'une quelconque des revendications 2 à 5, dans lequel ladite zone définie (38) est disposée adjacente à un côté d'échappement des gaz d'oxydation (34) de l'empilage (2), pour produire, dans ladite zone définie (38), une aire de condensation d'électrolyte qui soit suffisamment plus froide que ledit reste de l'empilage, pour provoquer la condensation de la vapeur d'électrolyte comprise dans les gaz d'oxydation, avant la sortie des gaz d'oxydation de l'empilage.

7. Système de refroidissement selon l'une quelconque des revendications 1 à 6, dans lequel le moyen servant de valve ajustable (26) est une valve à trois voies.

FIG. 1

FIG. 2

FIG. 3

TEMP

$\Delta$T

$\Delta$t

TIME

Inlet

Exit